(19) Europäisches Patentamt

European Patent Office

Office européen des brevets

(11) Veröffentlichungsnummer: **0 006 860**
**B1**

(12) **EUROPÄISCHE PATENTSCHRIFT**

(45) Veröffentlichungstag der Patentschrift:
07.10.81

(51) Int. Cl.³: **G 05 D 16/20,** B 01 D 25/12

(21) Anmeldenummer: **78900024.7**

(22) Anmeldetag: **22.06.78**

(86) Internationale Anmeldenummer:
**PCT/DE 78/00006**

(87) Internationale Veröffentlichungsnummer:
**WO 79/00012 (11.01.79** Gazette **79/1)**

(54) **Selbsttätige Schliesskraftregeleinrichtung zur Dichthaltung von Filterelementsätzen in Filterpressen.**

(30) Priorität: **24.06.77 DE 2728378**

(43) Veröffentlichungstag der Anmeldung:
**23.01.80 Patentblatt 80/2**

(45) Bekanntmachung des Hinweises auf die Patenterteilung:
**07.10.81 Patentblatt 81/40**

(84) Benannte Vertragsstaaten:
**CH DE FR GB**

(56) Entgegenhaltungen:
**DE-A-1 761 952**
**FR-A-1 434 328**

(73) Patentinhaber: **KERLER, Manfred, Ing. grad.,**
**Industriestrasse 49, D-8963 Waltenhofen-Hegge (DE)**

(72) Erfinder: **KERLER, Manfred, Ing. grad.,**
**Industriestrasse 49, D-8963 Waltenhofen-Hegge (DE)**

ACTORUM AG.

## Selbsttätige Schliesskraftregeleinrichtung
### zur Dichthaltung von Filterelementsätzen in Filterpressen

Anwendungsgebiet:

Die vorgeschlagene Einrichtung dient dazu, ein Mass für den Istwert der Flächenpressung an den Dichtleisten von Filterpressen aus einer Vielzahl von Messignalen abzuleiten, weil eine direkte Messung dieser Grösse nicht durchführbar ist. Mit Hilfe dieses abgeleiteten Istwerts wird eine geregelte Nachführung der Schliesskraft ermöglicht. Die Filterpressen selbst werden in der Verfahrenstechnik zum Trennen von Suspensionen verwendet.

Stand der Technik:

Zur Dichthaltung von Filterelementsätzen muss eine Schliesskraft aufgewendet werden, die an den Dichtleisten der Filterelemente eine ausreichende Pressung der Dichtleistenfläche erzeugt. In der Regel wird diese Schliesskraft durch einen Hydraulikzylinder aufgebracht. Während des Filtrierens, Waschens und Abpressens, sowie gegebenenfalls weiterer Arbeitsschritte, werden in der Filterpresse Innendrucke wirksam, die über die Innenfläche der Filterelemente eine Öffnungskraft bewirken. Die Schliesskraft wird also durch die Öffnungskraft vermindert, so dass die Flächenpressung an den Dichtleisten zurückgeht. Um das Undichtwerden der Presse zu verhindern, muss entweder eine für alle Betriebszustände ausreichend hohe Schliesskraft oder eine den jeweiligen Betriebszuständen angepasste Schliesskraft erzeugt werden. Die erstgenannte Betriebsart führt zu hoher und schwellender Belastung der Filtertücher und Filterelemente, deshalb ist diese Betriebsart mit erhöhtem Verschleiss der Filterapparatur verbunden. Die zweitgenannte Betriebsart wird angestrebt, ist jedoch schwierig zu verwirklichen, weil die Grösse der Flächenpressung an den Dichtleisten nicht direkt messbar ist.

Es ist eine Vorrichtung bekannt, wie in der DT-PS 1 536 825 beschrieben, die den Innendruck in den Filterkammern entweder durch einen Druckteller im Filterkopfstück oder in der Suspensionsleitung ermittelt und über einen Differenzialkolben mit dem Hydraulikdruck im Schliesssystem vergleicht. Der im Steuerraum des Differenzialkolbens anstehende Druck soll hiernach ein Mass für die Grösse der Dichtkraft sein. Diese Vorrichtung weist in der praktischen Anwendung eine Reihe von Mängeln auf, nämlich:

– Die im Pressenkopfstück eingebauten Druckteller sind mit ihrer Trennmembran der mechanischen Beschädigung beim Ausladen der Filterpressen leicht zugänglich und erreichen deshalb nur geringe Standzeiten. – Wegen der unvermeidlichen Bewegung des Drucktellers im Pressenkopfstück wird besonders bei Membranfilterpressen z.B. der Abpressdruck in der Membrankammer nicht mit der erforderlichen Genauigkeit übertragen. Auch mechanisch feste Filterkuchen tragen zur Verfälschung bei.

– Der schwerwiegendste Mangel liegt jedoch im Differenzialkolben selbst: Dieses Bauteil soll einerseits leicht beweglich sein, um ohne Verfälschung der anstehenden Kräfte im Steuerraum einen der Dichtkraft entsprechenden Druck zu erzeugen, andererseits muss der Differenzialkolben zuverlässig über Stunden hinweg den sog. Steuerraum gegenüber dem Druckölraum abdichten. Diese gegensätzlichen Forderungen sind nicht zu verwirklichen. Im praktischen Betrieb wird immer nach mehr oder minder langer Zeit der Steuerraum durch den Leckfluss den Druck des Druckölraumes annehmen und wegen des so vorgetäuschten steigenden Druckes das Entlastungsventil öffnen; solange, bis die Presse undicht wird und womöglich das Filtrat austritt.

Eine weitere Anordnung ist aus der DT-OS 1 761 952 bekannt Hierbei wird der Druck in der Trübeleitung und in der Hydraulikleitung mit Manometern gemessen und mittels angebauten Widerstandsfernsendern in einer Wheatstoneschen Brücke verglichen. Diese Einrichtung vermag zwar während des Filtrierens den Hydraulikdruck richtig nachzuführen, jedoch versagt die Anordnung bei der Beaufschlagung der Filterpresse mit Wasch- und Abpressmedien, besonders bei Membranfilterkammern. Im einzelnen ist zu bemängeln, dass

– die über andere Leitungen, als die Trübeleitung, zugeführten Prozessmedien wegen der gewollten Ablagerung des Filtrats in den Filterkammern einen meist grossen Strömungswiderstand zwischen dem Einleitkanal und dem Manometer in der Trübeleitung vorfinden. Aus diesem Grunde ist die Druckmessung z.B. des Waschmediums mit dem Manometer der Trübeleitung fehlerbehaftet. Auch muss in diesem Falle das Ventil in der Trübeleitung zuverlässig dichthalten, um eine solche Messung überhaupt zu ermöglichen.

– die Druckmessung in der Membrankammer bei Membranfilterpressen nicht möglich ist.

– schliesslich die Wheatstonesche Brückenschaltung auch bei denkbarer Erweiterung nicht geeignet ist, entsprechend dem Betriebsablauf der Filterpresse selbsttätig den jeweils gültigen Messwert der Innendrucke auszuwählen und in Relation zum Schliessdruck zu setzen.

Aufgabenstellung:

Der Erfindung liegt die Aufgabe zugrunde, alle genannten Nachteile der bekannten Vorrichtungen zu vermeiden und unter Verwendung möglichst handelsüblicher Bauteile eine Einrichtung zu schaffen, die selbsttätig das jeweils richtige Messsignal der Innendrucke auswählt, mit dem Messsignal des Schliessdruckes kraftgrössenrichtig vergleicht, hieraus ein Mass für die tatsächliche Flächenpressung an den Dichtleisten der Filterpresse ableitet und so die geregelte Nachführung des Schliessdruckes ermöglicht.

2

**Lösung:**

Somit wird vorgeschlagen, den Druck aller Prozessmedien, wie Suspensionen, Wasser, Druckluft, Waschflüssigkeit usw., die während des Betriebes in die Innenräume der Filterpresse geleitet werden, an ihrem Eintritt in die Filterpresse, bzw. an ihrem Verteilungskanal mit Druckmessgeräten zu messen und in Messignale umzusetzen. Ebenso wird der Druck im Hydrauliksystem des Schliesskolbens gemessen und in ein Messignal umgewandelt. Alle Messignale werden durch Bewertungseinrichtungen oder einstellbare Übersetzungsverhältnisse entsprechend den Flächen, auf die die Drucke wirken, so bewertet, dass eine Einheit eines jeden Messignals einer bestimmten Krafteinheit entspricht. Mit Hilfe einer Maximalwert-Auswahleinrichtung wird das die Öffnungskraft darstellende Signal, d.h. das Messignal, welches das grösste Produkt aus Druck mal wirksamer Fläche darstellt, ausgewählt. Wegen den unterschiedlichen Druckübertragungs-Eigenschaften der Filterkuchen und der Membranplatten können nämlich auch nicht unter Druck stehende Anschlüsse der Filterpresse unterschiedliche Drucke annehmen. Massgeblich für die Kraft, mit der das Filterplattenpaket auseinandergedrückt wird, ist jedoch nur der grösste Druck. Alle anderen Innendrucke sind durch die konstruktiven Eigenschaften der Filterpreese an der Öffnungskraft nicht ursächlich beteiligt. Das so ermittelte Messignal der Öffnungskraft wird in einer Subtraktionsanordnung von dem Messignal der Schliesskraft abgezogen.

Das Ergebnis dieser Subtraktion ist das Messignal für die Dichtkraft, jener Kraft, die auf den Dichtleisten die Flächenpressung erzeugt. Dieses Messignal wird wiederum mit handelsüblichen, den Anforderungen genügenden Regelgeräten mit einem Sollwert verglichen und aus der Regelabweichung ein Stellbefehl zur Nachführung des Schliessdruckes erzeugt. Der Sollwert kann dabei als einstellbarer Festwert oder als zeit- bzw. druckabhängiger variabler Wert ausgeführt werden.

Je nach Art der gewählten Messignale, kann die erfindungsgemässe Lösung mit analogen oder digitalen, mit elektrischen, pneumatischen, hydraulischen oder mechanischen Messignalen verwirklicht werden.

**Vorteile:**

Die vorgeschlagene Lösung ist geeignet, die vielfältigen Filtrationsmethoden und die entsprechend unterschiedliche Anzahl der Mediumsanschlüsse (Anzahl der Innendrucke) durch eine grundlegende, jederzeit erweiter- oder reduzierbare Anordnung abzudecken.

Diese Schliesskraftregelung trägt erheblich zur Verschleiss- und Reparaturkostenminderung an Filterpessen bei, insbesonders durch
– gleichmässige, auf die notwendige Dichthaltung begrenzte Einspannpressung der Filterelemente; dadurch werden gummierte Filterelemente gegen Abplatzen der Gummierung, Kunststoff-Filterelemente gegen Fliessen und Verspröden des Kunststoffs geschützt

– durch die reduzierte, gleichmässige Einspannpressung werden die Garnkreuzungspunkte der Filtertücher nicht abgequetscht; deshalb geringerer Filtertuchverschleiss
– die ebenfalls begrenzten Hydraulikkräfte beim Öffnen der Presse verhindern beim Überfahren des Endschalters die Zerstörung des Gelenkes zwischen Andruckplatte und Zylinderstange
– die Messschaltung enthält keinerlei Verschleissteile
– zuverlässige, erprobte, seriengefertigte Druckmessumformer und Regelgeräte, die bei Bedarf einzeln ersetzt bzw. repariert werden können; deshalb Reparaturkostenbegrenzung auf das einzelne Element, anstelle des Ausbaus und der Überholung eines ganzen Aggregats.

**Beschreibung eines Ausführungsbeispiels:**

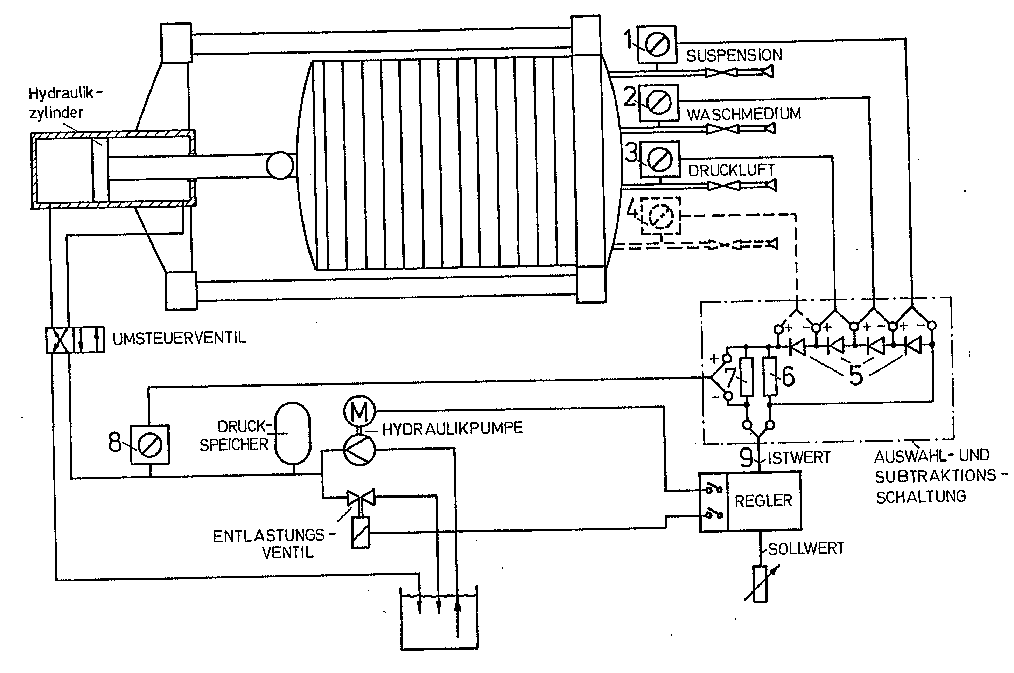

Fig. 1 zeigt als Prinzipschaltbild eine Ausführung mit elektrischen Messignalen, welche mittels elektronischer Druckmessumformer gewonnen werden. Die Messignale sind als eingeprägte Ströme ausgebildet. Mit den Messumformern (1), (2), (3) werden die Drucke der Suspension, eines Waschmediums und der Druckluft gemessen. Der gestrichelt gezeichnete Messumformer (4) steht für beliebige weitere Mediumsanschlüsse, z.B. weitere Waschmedien, Presswasser usw.

Durch die Schaltdioden (5) wird in einfacher Weise aus der Vielzahl der eingeprägten Ströme (Innendruck- bzw. Öffnungskraftmessignale) der jeweils grösste Strom ausgewählt. Alle kleineren Ströme werden, durch ihre vom Grösststrom durchgeschalteten Schaltdioden, entgegen deren ursprünglicher Sperrichtung in sich kurzgeschlossen. Der so ausgewählte Grössstrom fliesst über den Messwiderstand (6) und erzeugt dort einen Spannungsabfall. Gleichzeitig fliesst über den Messwiderstand (7) der eingeprägte Strom des Hydraulikdruck-Messumformers (8) und erzeugt ebenfalls einen Spannungsabfall. Die Messwiderstände sind so bemessen und die Druckmessumformer so justiert, dass die Spannungsabfälle an den Messwiderständen analoge Abbildungen der Schliesskraft und der Öffnungskraft darstellen. Durch die schaltungsmässige Anordnung der Messwiderstände (6) und (7), sowie durch die Stromrichtung in den Messwiderständen ist eine Subtraktionseinrichtung verwirklicht. Am Ausgang (9) der Schaltung steht die Spannungsdifferenz der beiden Spannungsabfälle als Istwert und Mass für die Dichtkraft zur Verfügung.

In bekannter Weise wird sodann über einen Regler der Istwert mit dem Sollwert verglichen und die gegebenenfalls anstehende Regelabweichung durch Betätigung der Hydraulikpumpe (Erhöhung der Schliesskraft und damit der Dichtkraft) oder durch Entlastung des Hydrauliksystems beseitigt. Die Auswahl- und Subtraktionsschaltung ist mit strichpunktierter Linie umrissen und als Wirkschaltplan gezeichnet. Alle anderen Messignal- und Befehlsleitungen sind nur als einpolige Verbindung skizziert. Die Stromversorgung, Schaltglieder für Motor und Magnetventil, sowie Nebenantriebe sind zur Hervorhebung des Wesentlichen nicht angegeben.

Hierzu ein Blatt Zeichnungen.

**Patentansprüche**

1. Selbsttätige Schliesskraftregeleinrichtung zur Dichthaltung von Filterelementsätzen in Filterpressen, welche die Flächenpressung an den Dichtleisten der Filterelemente in Abhängigkeit von den durch mehrere, über getrennt Kanäle zugeführte Prezessmedien bewirkten Innendrukken entweder konstant hält oder nach einer zeit- oder druckabhängigen Sollwertfunktion regelt, dadurch gekennzeichnet, dass

a) mit jedem der vorhandenen Kanäle für die Zufuhr von Prozessmedien (Suspension, Waschmedium, Druckluft usw.) ständig ein Druckmessgerät (1, 2, 3, 4) verbunden ist, dessen Ausgangssignal durch Einstellen des Übersetzungsverhältnisses im Druckmessgerät oder durch Beeinflussung in einer getrennten Druck/Kraft-Umrechungseinrichtung ein Mass für die von dem gemessenen Druck erzeugte Kraft ist;

b) mit den Ausgängen der Druckmessgeräte (1, 2, 3, 4) oder der diesen nachgeschalteten Druck/Kraft-Umrechungseinrichtungen eine Maximalwert-Auswahleinrichtung (5) verbunden ist, die das jeweils grösste der empfangenen Signale an eine Subtraktionseinrichtung (6, 7) weiterleitet;

c) ein Hydraulikdruck-Messumformer (8) den Druck im Schliesszylinder der Filterpresse misst und ein der vom Schliesszylinderdruck erzeugten Kraft entsprechendes Signal an die Subtraktionseinrichtung (6, 7) abgibt;

d) die Subtraktionseinrichtung (6, 7) die Differenz zwischen den von der Maximalwert-Auswahleinrichtung (5) und vom Messwertumformer (8) gelieferten Signalen bildet und das Differenzsignal als Istwert an einen Eingang eines Reglers abgibt, dessen anderer Eingang mit einem Sollwertgeber und dessen Ausgang mit einem Hydraulikdruck-Steller im Schliesszylinderkreis verbunden ist.

2. Einrichtung nach Anspruch 1, dadurch gekennzeichnet, dass die Druckmessgeräte (1, 2, 3, 4) unmittelbar an den Einleitkanälen oder an den Verteilerleitungen der Filterpresse druckseitig angeschlossen sind.

3. Abwandlung der Einrichtung nach Anspruch 1, dadurch gekennzeichnet, dass anstelle der Messung des Hydraulikdruckes (8), direkt die zum Schliessen der Filterpresse aufgebrachte Kraft mittels eines Kraftmessgerätes ständig gemessen und in ein Messignal umgewandelt wird.

**Revendications**

1. Système régulateur automatique de la force de serrage pour l'étanchéité des jeux d'éléments filtrants dans des presses à filtres, lequel maintient constant ou bien règle selon une fonction de la valeur de consigne dépandante de la pression ou du temps la pression superficielle aux joints des éléments filtrants en relation des pressions intérieures provoquées par des substances de procédé qui sont alimentées par divers conduites séparées, caractérisé en ce que

a) un manomètre (1, 2, 3, 4) est raccordé continuellement à chaque conduite d'alimentation des substances de procédé (suspension, liquide de lavage, air comprimé, etc.), dont le signal de sortie, en ajustant le rapport de transformation dans le manomètre ou en influant sur un dispositif séparé de conversion pression-force, est une valeur pour la force produite par la pression mesurée;

b) un dispositif à sélectionner la valeur maximum (5) est raccordé aux sorties des manomètres (1, 2, 3, 4) ou bien aux dispositifs de conversion pression-force, lequel transmet le plus grand des signaux reçus à un dispositif de soustraction;

c) un transmetteur de mesure de la pression hydraulique (8) mesure la pression dans le cylindre de serrage de la presse à filtres et transmet un signal au dispositif de soustraction (6, 7) qui équivant à la force provoquée par la pression du cylindre de serrage;

d) le dispositif de soustraction (6, 7) détermine la différence entre les signaux fournis du dispositif à sélectionner la valeur maximum (5) et du transmetteur de mesure (8) et transmet le signal de différence comme une valeur instantanée à une entrée d'un régulateur dont l'autre entrée est raccordée à un transmetteur de la valeur de consigne et dont la sortie est raccordée à un ensemble régleur de la pression hydraulique dans le circuit du cylindre de serrage.

2. Arrangement selon revendication 1, caractérisé en ce que les manomètres (1, 2, 3, 4) sont raccordés immédiatement au côté de refoulement aux conduites d'alimentation ou aux conduites d'enbranchement de la presse à filtres.

3. Modification de l'arrangement selon revendication 1, caractérisé en ce que au lieu de mesurer la pression hydraulique (8), directement la force appliquée pour le serrage de la presse à filtres est continuellement mesurée avec un instrument de mesure de force et convertie en un signal de mesure.

**Claims**

1. Automatic locking pressure control arrangement for the sealing of filter element sets in filter presses, which either keeps constant or controls according to a time or pressure dependent set value function the surface pressure at the tight joints of the filter elements in dependence on the internal pressures produced by several process media which are fed in through separated conduits, characterized in

a) a pressure gauge (1, 2, 3, 4), constantly connected to each of the feed conduits of the process media (suspension, washing medium, compressed air etc.), the output signal of which, by setting the transposition ratio in the pressure gauge or by exercising an influence in a separated pressure-force-conversion device, is a value for the force produced by the measured pressure;

b) a maximum value selection device (5), connected with the outputs of the pressure gauges (1, 2, 3, 4) or with the downstream pressure-force-conversion devices, which transmits the biggest one of

**0 006 860**

the received signals to a subtraction arrangement (6, 7);

c) a hydraulic pressure transmitter (8), measuring the pressure in the hydraulic cylinder of the filter press and transmitting a signal which is equivalent to the force produced by the hydraulic cylinder pressure to the subtraction arrangement (6, 7);

d) the subtraction arrangement (6, 7), which determines the difference between the signals supplied from the maximum value selection device (5) and from the transmitter (8) and gives the difference signal as an instantaneous value to one input of a control unit, the other input of which is connected to a set value transmitter and the output of which is connected with a hydraulic pressure regulating unit in the hydraulic cylinder loop.

2. Arrangement as in claim 1, characterized in the pressure gauges (1, 2, 3, 4) which are immediately connected at the pressure side to the feed conduits or to the manifold conduits of the filter press.

3. Variation of the arrangements described in claim 1, characterized by the fact that instead of measuring the hydraulic pressure (8) directly the force applied for sealing the filter press is constantly measured by means of a force measuring instrument and converted into a measuring signal.

AUSWAHL- UND SUBTRAKTIONS-SCHALTUNG

SUSPENSION

WASCHMEDIUM

DRUCKLUFT

5

6

7

9 ISTWERT

REGLER

SOLLWERT

1

2

3

4

Hydraulik-zylinder

UMSTEUERVENTIL

M HYDRAULIKPUMPE

DRUCK-SPEICHER

ENTLASTUNGS-VENTIL

8